Europäisches Patentamt

European Patent Office

Office européen des brevets

(11) Publication number: **0 122 874**
**B1**

(12) **EUROPEAN PATENT SPECIFICATION**

(45) Date of publication of patent specification: **31.05.89**

(51) Int. Cl.⁴: **B 01 D 53/04,** C 01 B 13/02

(21) Application number: **84730031.6**

(22) Date of filing: **29.03.84**

(54) **Process for separating a mixed gas into oxygen and nitrogen under low temperature and low pressure conditions.**

(30) Priority: **30.03.83 JP 54626/83**

(43) Date of publication of application:
**24.10.84 Bulletin 84/43**

(45) Publication of the grant of the patent:
**31.05.89 Bulletin 89/22**

(84) Designated Contracting States:
**BE DE FR GB NL**

(56) References cited:
**US-A-3 313 091**
**US-A-3 973 931**

(73) Proprietor: **MITSUBISHI JUKOGYO KABUSHIKI KAISHA
5-1, Marunouchi 2-chome Chiyoda-ku
Tokyo 100 (JP)**

(72) Inventor: **Fukuda, Shozo c/o Nagasaki Technical Institute
MITSUBISHI JUKOGYO K.K. 1-1, Akunoura-machi
Nagasaki City Nagasaki Pref. (JP)**
Inventor: **Shirakawa, Seiichi Nagasaki Technical Institute
MITSUBISHI JUKOGYO K.K. 1-1, Akunoura-machi
Nagasaki City Nagasaki Pref. (JP)**
Inventor: **Fujioka, Yuichi Nagasaki Technical Institute
MITSUBISHI JUKOGYO K.K. 1-1, Akunoura-machi
Nagasaki City Nagasaki Pref. (JP)**
Inventor: **Tsutaya, Hiroyuki Nagasaki Technical Institute
MITSUBISHI JUKOGYO K.K. 1-1, Akunoura-machi
Nagasaki City Nagasaki Pref. (JP)**

Courier Press, Leamington Spa, England.

(72) Inventor: **Maehara, Kenichi Nagasaki Shipyard & Engine Works**
**MITSUBISHI JUKOGYO K.K. 1-1, Akunoura-machi**
**Nagasaki City Nagasaki Pref. (JP)**
Inventor: **Izumi, Jun c/o Nagasaki Technical Institute**
**MITSUBISHI JUKOGYO K.K. 1-1, Akunoura-machi**
**Nagasaki-City Nagasaki Pref. (JP)**

(74) Representative: **Meissner, Peter E., Dipl.-Ing. et al**
**Herbertstrasse 22**
**D-1000 Berlin 33 (DE)**

**Description**

This invention relates to a process for separating a mixed gas mainly composed of $O_2$ and $N_2$, e.g. air, into $O_2$ and $N_2$ by making use of an adsorbent capable of selectively adsorbing $N_2$ thereon.

Separation of air into $O_2$ and $N_2$ by adsorption of $N_2$ with adsorbents has several advantages that the apparatus is small in size and simple and is operated under little or no control of man with little need of maintenance. So, moderate- and small-size apparatus having the ability to produce $O_2$ in an amount of from 10 to 3,000 $Nm^3$-$O_2$/hr are recently used more and more. Thus, there is the tendency that the apparatus gradually expel use of liquid oxygen which is made by the low temperature gas separator and transported for application.

One typical apparatus is briefly described below. The apparatus includes an air compressor, two or more adsorption towers for $N_2$, and optionally, a vacuum pump. In the apparatus, when compressed air is fed into one tower, $N_2$ in the air is adsorbed on the $N_2$ absorbent filled therein and removed. The remaining high pressure $O_2$ is passed down-stream of the adsorption tower and collected. In the other tower, the adsorbed $N_2$ is released under reduced pressure (in some cases, $N_2$ may be removed by countercurrently passing part of the $O_2$ product or by means of a potential vacuum pump) and then collected. The above procedures are alternately repeated to continuously separate $O_2$ and $N_2$ from each other.

Typical $N_2$ adsorbents which are used for packing in the adsorption towers are Na-A zeolite 60 to 70% of which is exchanged with Ca and which has been put into practice by Union Carbide Co., Ltd. This exchanger serves to selectively adsorb $N_2$ from a two-component mixed gas of $O_2$ and $N_2$. When using air, co-adsorption of $O_2$ is assumed to be below 10% of the adsorption of $N_2$.

This type of $O_2$ and $N_2$ separator has been described above as being advantageous when designed in small or moderate size. For the production of 1 $Nm^3$ of $O_2$, however, it requires a power consumption of 0.75 to 1 KWh, which is larger than a power consumption of 0.45 KWh required for the production of $O_2$ by the large capacity low temperature gas separation process. Moreover, even if the apparatus is increased in capacity, only a reduced scale merit is expected. It is generally accepted that the adsorption technique is not competitive with the low temperature gas separation process in the capacity range not smaller than 3,000 $Nm^3$-$O_2$/hr.

Various improved methods of overcoming the above disadvantages may be considered but such methods would usually involve the following problems when described in association with the present invention.

With regard to the reduction of the power consumption, it may be possible to carry out the adsorption operation under low pressure while reducing the air pressure. However, the amount of adsorbed $N_2$ lowers almost in proportion to the pressure, with the capacity of the apparatus increasing extremely. Next, in order to increase an amount of adsorption, it is considered to effect the adsorption operation under low temperature conditions. In this case, the amount of adsorbed $N_2$ increases but adsorption and desorption speeds decrease considerably. This leads to a lower concentration of the $O_2$ product than in the case using room temperature when compared at the same tower length. The decrease of temperature results in an increase of the co-adsorption of $O_2$ at the time when $N_2$ is adsorbed, with the power per unit production of oxygen increasing gradually.

It is accordingly an object of the invention to provide a process for separating a mixed gas mainly composed of $O_2$ and $N_2$ into $O_2$ and $N_2$ which overcomes the disadvantages of the prior art processes.

It is another object of the invention to provide the process of the above-mentioned type which makes use of sodium faujasite by which an increase amount of adsorption of $N_2$ under low temperature and low pressure conditions is ensured while making it possible to keep an adsorption speed within a practical range.

It is a further object of the invention to provide the process whereby the adsorption selectivity to $N_2$ is not so reduced even under low temperature and low pressure conditions.

The above objects can be achieved, according to the invention, by a process for separating a mixing gas of oxygen and nitrogen under low temperature and low pressure conditions which comprises introducing a mixed gas comprising chiefly oxygen and nitrogen into at least two adsorption towers, each packed with Na-X, at a temperature equal to or less than −30°C and under conditions of $1.02 \times 10^5$ to $2.9 \times 10^5$ Pa pressure thereby causing the nitrogen in the mixed gas to be selectively adsorbed, collecting highly pure oxygen or an oxygen-enriched gas from the outlet of the adsorption towers, and reducing the pressure of each adsorption tower in which the nitrogen has been adsorbed, to a level of from $7.84 \times 10^3$ to $4.9 \times 10^4$ pa to cause the nitrogen gas to be desorbed and the Na-X adsorbent to be regenerated.

US—A—3313091 discloses a separating process with all the above mentioned features apart from the claimed temperature range. Preferably Sr-X is used. The temperature for operation is preferably 14 to 25°C (57 to 77°F) but temperatures about −23 to 43°C (−10°F to 110°F) are mentioned, too. Moreover, the use of Na-X at room temperature is disclosed in this document.

US—A—3973931 discusses the use of Na-X as adsorbent in connection with $O_2$ recovery, but at a higher temperature range than the range claimed.

None of the prior arts has however considered the surprising behaviour of said Na-X adsorbent at low temperatures equal to or less than −30°C.

Details of these results will be shown now.

FIG. 1 is a flow chart of an air separator illustrating an embodiment of the present invention;

FIG. 2 is a graph showing the relation between power per unit amount of produced oxygen and absorption pressure;

FIG. 3 is a graph showing the relation between power per unit amount of produced oxygen and desorption pressure;

FIG. 4 is a graph showing the relation between power per unit amount of produced oxygen and temperature;

FIG. 5 is a graph showing the relation between concentration of $O_2$ at the outlet of an adsorption tower; and

FIG. 6 is a graph showing the relation between amount of an adsorbent required for production of 1 $Nm^3$-$O_2$/hr and temperature.

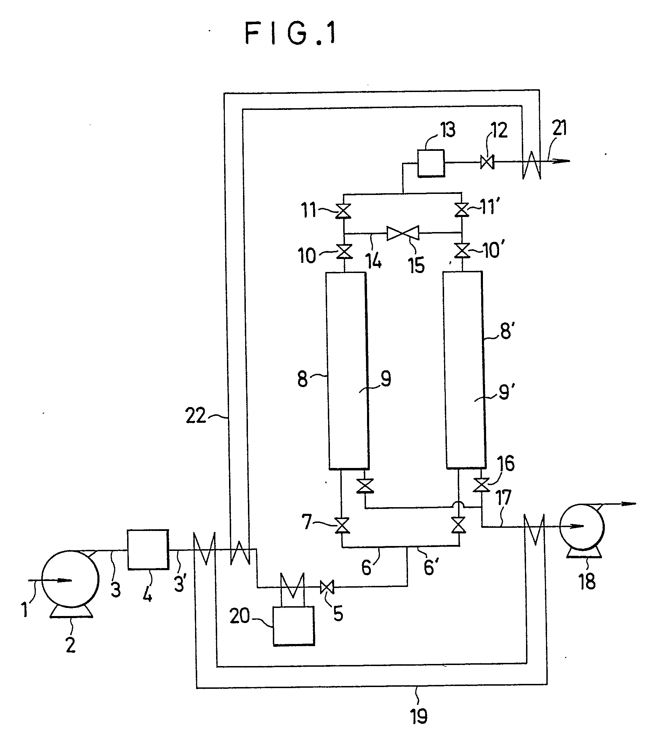

Referring now to the accompanying drawings and particularly to FIG. 1 showing a flow chart of an air separator embodying the invention. The air separator is used to separate air into $O_2$ and $N_2$ with use of an $N_2$ adsorbent of a sodium faujasite such as Na-X.

In the figure, air is passed through a line 1 to a compressor 2 in which it is compressed to a level of 1.02 $\times 10^5$ to $2.9 \times 10^5$ Pa. The compressed air is fed from a line 3 into a dehumidifying and decarbonating unit 4 by which very clean, compressed air is obtained. A valve 5 located downstream of a line 3' is kept open and the clean compressed air is passed through a line 6 and an opened valve 7 into an adsorption tower 8. In the adsorption tower 8, $N_2$ in the compressed air is removed by adsorption with an $N_2$ adsorbent 9, so that a concentration of $O_2$ increases as the air moves upwards. Subsequently, the compressed air is further passed through opened valves 10, 11, and 12 and a tank 13 for oxygen product placed intermediate between the valve 11 and a valve 12 and collected as oxygen product. On the other hand, part of the $O_2$ product is fed toward a line 14 and its pressure is reduced by means of a reducing valve 15, followed by feeding through an opened valve 10' into an adsorption tower 8'. The tower 8' is connected through an opened valve 16 and a line 17 to a vacuum pump 18 by which its pressure is reduced. By this, the part of the $O_2$ product is passed in the state of negative pressure countercurrently with the passage of air in the adsorption tower 8'. As a result, the $N_2$ adsorbed on an adsorbent 9' in the absorption tower 8' is readily released and the adsorbent 9' is regenerated within a short time. When the adsorbent 9 for $N_2$ in the tower 8 is saturated and the adsorbent 9' in the adsorption tower 8' from which $N_2$ has been released is regenerated, the line 6 for the air passage is changed over to a line 6'. The above procedure is subsequently repeated, so that $O_2$ product can be continuously collected. It will be noted that a zone extending from the line 3' for the clean compressed air through the line 17 for the gas mainly composed of the released $N_2$ is heat-exchangeable by means of a heat exchanger 19. Likewise, a zone established between the line 21 for the $O_2$ product and the line 3' is heat-exchangeable by means of a heat exchanger 22. In the line 3' is provided a compression refrigerator 20, so that the adsorption towers 8 and 8' are very efficiently cooled and desired low temperature conditions are readily attained. Upon changing-over of the adsorption towers, not only the line 6 is changed over to 6' (or vice versa), the valves 10, 15, 10' are first fully opened so that $O_2$ remaining immediately after discharge from the adsorption tower 8 is partially transferred to the adsorption tower 8' which has been just regenerated. By this, blow-by of the inlet air accompanied by an increase of the pressure occurring immediately after the changing-over is prevented and the $O_2$ remaining downstream of the adsorption tower and the compressed air present upstream of the tower are suppressed, in a minimum, from discharge to outside. Assuming that the pressure of the adsorption tower 8 is taken as $P_0$ (Pa) and the pressure of the adsorption tower 8' is as $P_1$ (Pa) the pressure after equalization is approximately $(P_0 + P_1)/2$ (Pa). After the pressure of the adsorption tower 8' has reached about $(P_0 + P_1)/2$, the valves 10', 11' are opened so that the tank 13 for the $O_2$ product and the adsorption tower are equalized, after which the adsorption tower 8' is filled with $O_2$ of high pressure. Assuming that a dead capacity of the adsorption towers 8, 8' (i.e. capacity of the space not occupied by the adsorbent in the towers) is taken as $V_1$ (liters), a capacity of the $O_2$ product tank is as $V_2$ (liters), and the pressure of the tank 13 prior to equalization is substantially equal to $P_0$ (Pa), the equalized pressure, $P_2$ (Pa), is approximately as follows:

$$P_2 = \frac{(P_0 + P_1) \times V_1/2 + P_0 V_2}{V_1 + V_2}$$

As compared with a sharp increase of pressure from $P_1$ (Pa) to $P_0$ (Pa) at the time when the towers are merely changed over, the pressure in the above procedure is gently changed step by step, i.e. $P_1$ (Pa) $\rightarrow$ $(P_0 + P_1)/2 \rightarrow P_2$ (Pa) $\rightarrow P_0$ (Pa). Consequently, while the air is prevented from blow-by at the time of the pressure increase, it becomes possible to minimize discharge of the remaining $O_2$ and compressed air in the desorption step to outside.

# EP 0 122 874 B1

According to the procedure using the air separator described with reference to FIG. 1, air separation was effected. Operating factors and conditions of the apparatus are indicated in Table 1 below.

TABLE 1

Operating Factors and Conditions of Adsorption System

| | |
|---|---|
| Adsorption Tower | diameter: 60 cm, length: 850 mm |
| Charge of adsorbent | 1.5 kg/tower |
| Number of towers | 2 |
| Tower-changing-over time | 1.5 minutes |
| Flow rate of product at outlet | 2 N1/minute |
| Adsorption tower pressure | $9.8 \times 10^4$—$4.9 \times 10^5$ Pa |
| Pressure of regeneration tower | $0.98$—$9.8 \times 10^4$ Pa |
| Temperature of adsorption tower | $20$— $-100°C$ |
| Kind of adsorbent | Na-X, $Ca_{2/3}$-$Na_{1/3}$-A |

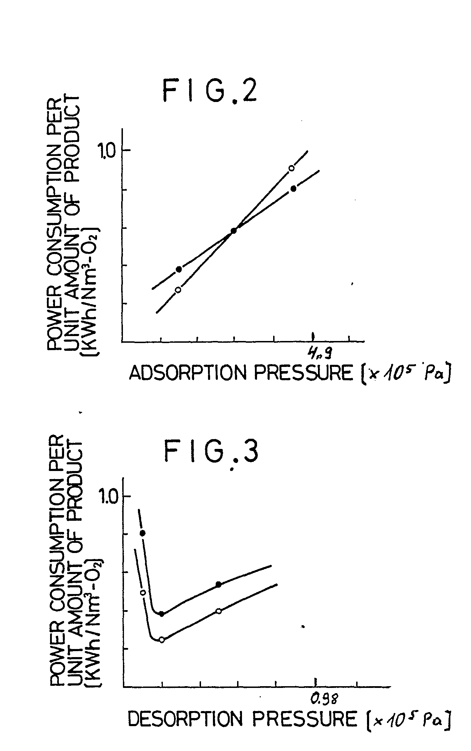

Air was separated into $O_2$ and $N_2$ under operating conditions indicated in Table 1. The results are summarized in FIGS. 2 through 6. In these figures, there are illustrated improvements of the $O_2$ and $N_2$ adsorption and separation technique of the pressure swing type using sodium faujasite adsorbent (hereinafter referred to as Na-X) according to the invention over known air separation techniques using 60—70% Ca exchanger of known Na-A zeolite (hereinafter referred to as $Ca_{2/3}$-$Na_{1/3}$-A).

FIG. 2 shows the relation between adsorption pressure and power consumption per unit amount of product. In the figure, the abscissa indicates adsorption pressure, $P_0$ Pa, and the ordinate indicates a power consumption (KW) required for production of 1 $Nm^3$/hr of $O_2$. Na-X and $Ca_{2/3}$-$Na_{1/3}$-A were used as the adsorbent and operating conditions were set such that the temperature was 20°C, the desorption pressure, $P_1$, was $1.96 \times 10^4$ Pa, and the superficial velocity in the tower, U, was 0.8 cm/second (at the outlet). Under these conditions, a power consumption was determined while changing the pressure of the adsorption tower in the range of from $1.47$—$4.4 \times 10^5$ Pa. In the figure, indicated by "O" is a curve for Na-X and by "●" is a curve for $Ca_{2/3}$-$Na_{1/3}$-A. As will be seen from FIG. 2, although it has been believed that Na-X is inferior to $Ca_{2/3}$-$N_{1/3}$-A in all the range of pressure, Na-X serves to separate oxygen from air in a smaller power consumption than $Ca_{2/3}$-$Na_{1/3}$-A provided that the adsorption pressure is below 3 ata. We believe that the above fact was first found by us because no Na-X was utilized in any conventionally proposed air separation techniques making use of $N_2$ adsorbents or such utilization was never seen any literature.

Next, operating conditions were set such that adsorption pressure, $P_0$, = $1.47 \times 10^5$ Pa, superficial velocity, U, = 0.8 cm/second, and temperature = 20°C. The power consumption was measured using $Ca_{2/3}$-$Na_{1/3}$-A and Na-X as the adsorbent under a varying desorption pressure, $P_1$, of from $0.98 \times 10^4$ to $4.9 \times 10^4$ Pa. The results are shown in FIG. 3 in which the relation between desorption pressure and power consumption is shown. In the figure, the abscissa indicates the desorption pressure, $P_1$ (Pa), and the ordinate indicates the power consumption required for production of 1 $Nm^3$/hr of $O_2$. Indicated by "O" is a curve for Na-X and by "●" is a curve for $Ca_{2/3}$-$Na_{1/3}$-A. No specific phenomena were found with respect to the desorption pressure. It should be noted that while the power consumption according to the known low temperature air separation process is in the range of 0.45 to 0.60 KWh/$Nm^3$—$O_2$ and the power consumption required for the existing separation process using $N_2$ adsorbents has a lower limit in the vicinity of 0.7 KWh/$Nm^3$—$O_2$, the power consumption can be reduced remarkably in the practice of the invention. In other words, the practical desorption pressure is in the range of from $0.78 \times 10^4$ to $4.9 \times 10^4$ Pa, preferably 0.98 to $2.9 \times 10^4$ Pa according to the invention.

Subsequently, the separation by adsorption was carried out under low temperature conditions. This is because an amount of adsorption of $N_2$ usually increases with a decrease of temperature, so that the break through point is reduced with an expectation of compactness of the separator and improvement of separation efficiency.

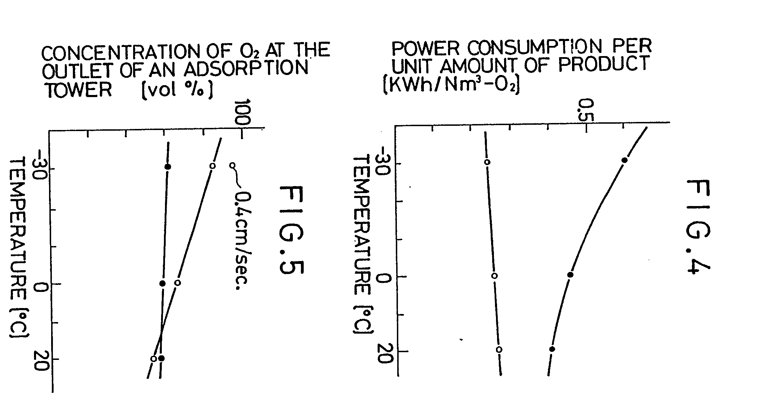

Operating conditions other than the temperature were set such that the adsorption pressure was $1.47 \times 10^5$ Pa, the regeneration pressure was $1.96 \times 10^4$ Pa and the superficial velocity, U, was 0.8 cm/second. The temperature was gradually decreased from room to lower temperatures to determine a power consumption required for production of 1 $Nm^3$/hr of oxygen at the respective temperatures. FIG. 4 shows

5

the relation between operating temperature and power consumption in which the abscissa indicates the temperature and the ordinate indicates the power consumption. Indicated by "○" is a curve for Na-X and by "●" is a curve for $Ca_{2/3}$-$Na_{1/3}$-A. As will be seen from FIG. 4, with $Ca_{2/3}$-$Na_{1/3}$-A, the power consumption rather increases with a decrease of the temperature. In contrast, with Na-X, the power consumption is kept decreased with a decrease of the temperature. The power consumption with respect to Na-X was checked in a range of temperature down to −60°C, revealing that no problem was involved in separation of air by adsorption. According to the isobaric data of Na-X with regard to one component system, the utility of Na-X was not lost even to a temperature as low as −100°C. In this connection, lower temperatures are not favorable because coadsorption of $O_2$ at the time of adsorption of $N_2$ is not negligible. In the temperature range mentioned above, any cooling means as used in conventional low temperature air separators may also be used.

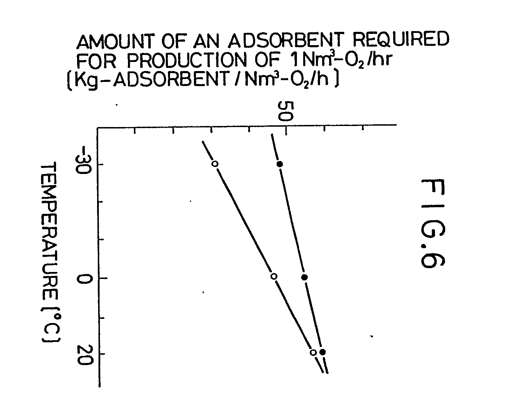

The improved performance of Na-X in the low temperature range and the inadaptability of $Ca_{2/3}$-$Na_{1/3}$-A are also proved by checking the concentration of $O_2$ at the outlet of the adsorption tower. FIG. 5 shows a graph showing the relation between temperature and concentration of $O_2$ at the outlet of an adsorption tower. In the figure, the abscissa indicates the temperature and the ordinate indicates the concentration of $O_2$ at the tower outlet. The mark "○" indicates a curve for Na-X and the mark "●" indicates a curve for $Ca_{2/3}$-$Na_{1/3}$-A.' Operating conditions were set such that adsorption pressure, $P_0 = 1.47 \times 10^5$ Pa, desorption pressure, $P_1 = 1.96 \times 10^4$ Pa and superficial velocity, $U = 0.4$—$0.8$ cm/second. While the temperature was lowered, the separation by adsorption was carried out. The curve of FIG. 5 is for the case where $U = 0.8$ cm/second. As will be seen from FIG. 5, with $Ca_{2/3}$-$Na_{1/3}$-A, the concentration of $O_2$ at the outlet of the adsorption tower does not substantially increase even in the low temperature range. On the other hand, with Na-X, the concentration of $O_2$ sharply increases with a decrease of the temperature. In case where the superficial velocity was 0.4 cm/second and the temperature was −30°C, the concentration of $O_2$ reached 96% (with the balance of argon) which exceeds an $O_2$ concentration of 94.5% which is the upper limit of the theoretical for the air separation using $N_2$ adsorbents. This leads to a novel process of producing highly pure $O_2$ from which argon is partially eliminated by the use of Na-X in such a temperature range as described above. The improvement of the $N_2$ adsorptivity at low temperatures will substantially mitigate the burden on the problem involved by the lowering of tower temperatures.

The power cost and the purity of $O_2$ have been chiefly described above. The cost associated with initial installation will be then described. The amount of an adsorbent which is required to produce 1 $Nm^3$ of $O_2$ per hour under operating conditions used in FIG. 5, i.e. adsorption pressure, $P_0 = 1.47 \times 10^5$ Pa, desorption pressure, $P_1 = 1.56 \times 10^4$ Pa and superficial velocity, $U = 0.8$ cm/second is shown in FIG. 6. FIG. 6 is a graph showing the relation between temperature and amount of adsorbent, in which the abscissa indicates the temperature and the ordinate indicates the weight of an adsorbent (Kg) necessary for producing 1 $Nm^3$ of $O_2$/hr. Indicated by "○" is a curve for Na-X and by "●" is a curve for $Ca_{2/3}$-$Na_{1/3}$-A. As will be seen from FIG. 6, the $Ca_{2/3}$-$Na_{1/3}$-A adsorbent is saved at low temperatures only by about 10% of the adsorbent required at room temperature. In contrast, with Na-X, about 45% of the adsorbent can be saved at −30°C. Thus, the use of Na-X gives a large effect in reducing a substantial amount of the adsorbent which occupies a substantial proportion of the installation cost.

As described in detail hereinafter, according to the invention, a mixed gas, e.g. air, is subjected to the pressure swing-type separation into different types of gases by adsorption by the use of a sodium faujasite such as Na-X under conditions of an adsorption pressure lower than $2.9 \times 10^5$ Pa, a desorption pressure ranging from $7.84 \times 10^3$ to $4.9 \times 10^4$ Pa and a temperature not higher than room temperature. By this, the power consumption required for producing 1 $Nm^3$ of $O_2$ per hour is from 0.45 to 0.6 KW for the low temperature air separation process and over 0.7 KW for existing adsorption and separation processes. This power consumption may be reduced to about 0.25 KW in the practice of the invention with an amount of an adsorbent being reduced to as low as 55% based on the case of the existing process.

The power consumption and the amount of adsorbent required in the process of the invention are much smaller than those required in conventional adsorption processes. Thus, the process of the invention is very useful in separating a mixed gas mainly composed of nitrogen and oxygen into nitrogen and oxygen.

**Claims**

1. A process for separating a mixed gas of oxygen and nitrogen under low temperature and low pressure conditions which comprises introducing a mixed gas comprising chiefly oxygen and nitrogen into at least two adsorption towers, each packed with Na-X at a temperature equal to or less than −30°C and under conditions of $1.02 \times 10^5$ to $2.9 \times 10^5$ Pa [1.05 to 3 ata] pressure thereby causing the nitrogen in the mixed gas to be selectively adsorbed, collecting highly pure oxygen or an oxygen-enriched gas from the outlet of the adsorption towers, and reducing the pressure of said at least two adsorption towers, in which the nitrogen has been adsorbed, to a level of from $7.84 \times 10^3$ to $4.9 \times 10^4$ Pa [0.08 to 0.5 ata], to cause the nitrogen gas to be desorbed and the Na-X adsorbent to be regenerated.

2. A process according to claim 1, wherein said mixed gas is air.

3. A process according to claim 1, wherein a part of the oxygen or oxygen-enriched gas collected in the first adsorption tower is partly fed to the second adsorption tower countercurrently with the mixed gas whereby the nitrogen adsorbed on the Na-X in the one adsorption tower is readily desorbed.

4. A process according to claim 1, wherein the changing-over from the first adsorption tower to the other adsorption tower is carried out so that the pressure within the other adsorption tower is increased stepwise.

**Patentansprüche**

1. Verfahren zur Trennung einer Gasmischung in Sauerstoff und Stickstoff unter niedrigen Temperatur- und Druckbedingungen, gekennzeichnet durch Einführen eins hauptsächlich aus Sauerstoff und Stickstoff bestehenden Gasgemisch in zumindest zwei mit Na-X gefüllte Adsorptionstürme bei einer Temperatur von −30° oder darunter und unter Druckbedingungen von 1,02 × 10⁵ bis 2,9 × 10⁵ Pa (1,05 bis 3 ata, wodurch der Stickstoff im Gasgemisch selektiv adsorbiert wird, Auffangen von hochreinem Sauerstoff oder sauerstoffangereichertem Gas vom Ausgang der Adsorptionstürme und Senken des Drucks der zumindestens zwei Adsorptionstürme, in denen der Stickstoff adsorbiert worden ist, auf eine Höhe von 4,9 × 10⁴ bis 7,84 × 10³ Pa (0,08 bis 0,5 ata), so daß der Stickstoff desorbiert und das Na-X Adsorbens regeneriert wird.

2. Verfahren nach Anspruch 1, dadurch gekennzeichnet, daß als Gasgemisch Luft verwendet wird.

3. Verfahren nach Anspruch 1, dadurch gekennzeichnet, daß ein Teil des Sauerstoffs oder des sauerstoffangereicherten Gases, das im ersten Adsorptionsturm aufgefangen wird, gegenströmig mit dem Gasgemisch zum Teil dem zweiten Adsorptionsturm zugeführt wird, wodurch der auf dem Na-X adsorbierte Stickstoff in dem einen Adsorptionsturm ohne weiteres desorbiert wird.

4. Verfahren nach Anspruch 1, dadurch gekennzeichnet, daß das Überwechseln vom ersten Adsorptionsturm zum anderen Adsorptionsturm so durchgeführt wird, daß der Druck innerhalb des anderen Adsorptionsturms stufenweise erhöht wird.

**Revendications**

1. Procédé pour séparer um mélange gazeux d'oxygène et d'azote dans des conditions de basse température et de basse pression, comprenant les étapes consistant à:
   — introduire un mélange gazeux comportant essentiellement de l'oxygène et de l'azote dans au moins deux tours d'adsorption, garnies chacune de Na-X à une température égale ou inférieure à −30°C et dans des conditions de pression de 1,02 × 10⁵ à 2,9 × 10⁵ Pa (1,05 à 3 atm.) en provoquant ainsi l'adsorption sélective de l'azote dans le mélange gazeux,
   — recueillir l'oxygène extrêmement pur ou le gaz enrichi en oxygène à la sortie des tours d'adsorption, et
   — réduire la pression desdites deux tours d'adsorption, dans lesquels l'azote a été adsorbé, à un niveau de 7,84 × 10³ à 4,9 × 10⁴ Pa (0,08 à 0,5 atm.) pour provoquer la désorption de l'azote et le régénération de l'adsorbant Na-X.

2. Procédé selon la revendication 1, dans lequel ledit mélange gazeux est de l'air.

3. Procédé selon la revendication 1, dans lequel une partie de l'oxygène ou du gaz enrichi en oxygène recueilli dans la première tour d'adsorption est en partie amené à la seconde tour d'adsorption, à contre-courant du mélange gazeux, grâce à quoi l'azote sur le Na-X dans la tour d'adsorption est facilement désorbé.

4. Procédé selon la revendication 1, dans lequel le passage de la première tour d'adsorption à l'autre tour d'adsorption est mis en oeuvre de sorte que la pression dans l'autre tour d'adsorption est augmentée graduellement.

# F I G . 1

# FIG.2

POWER CONSUMPTION PER UNIT AMOUNT OF PRODUCT [KWh/Nm³-O₂]

1.0

4,9

ADSORPTION PRESSURE [× 10⁵ Pa]

# FIG.3

POWER CONSUMPTION PER UNIT AMOUNT OF PRODUCT [KWh/Nm³-O₂]

1.0

0.98

DESORPTION PRESSURE [× 10⁵ Pa]

2

# F I G .4

# F I G .5

# FIG.6